**Europäisches Patentamt**

**European Patent Office**

**Office européen des brevets**

(19)

(11) Veröffentlichungsnummer: **0 061 562**
**B1**

(12)

# EUROPÄISCHE PATENTSCHRIFT

(45) Veröffentlichungstag der Patentschrift:
04.06.86

(21) Anmeldenummer: **82100297.9**

(22) Anmeldetag: **16.01.82**

(51) Int. Cl.⁴: **F 16 K  27/00,** F 16 K  11/074,
E 03 C  1/04

(54) **Mischventil für Waschtische, Spültische, Sitzwaschbecken oder dergl. sanitäre Apparate.**

(30) Priorität: **30.03.81  DE 3112614**

(43) Veröffentlichungstag der Anmeldung:
**06.10.82 Patentblatt 82/40**

(45) Bekanntmachung des Hinweises auf die Patenterteilung:
**04.06.86 Patentblatt 86/23**

(84) Benannte Vertragsstaaten:
**AT BE FR GB IT NL**

(56) Entgegenhaltungen:
**DE - B - 1 550 060**
**FR - A - 2 244 112**
**GB - A - 1 179 942**
**GB - A - 1 367 721**
**US - A - 1 916 553**
**US - A - 3 192 952**

(73) Patentinhaber: **IDEAL-STANDARD GMBH, Euskirchener
Strasse 80, D-5300 Bonn 1 (DE)**

(72) Erfinder: **Nolden, Werner, Trierer Strasse 33,
D-5560 Wittlich (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf ein Mischventil in der Form eines Standventils für Waschtische, Spültische, Sitzwaschbecken od.dgl. sanitäre Apparate, wobei das Ventilgehäuse einen Gehäusesockel aufweist, der senkrecht auf der Armaturenbank ruht und eine vordere Öffnung aufweist, in die ein abnehmbarer Mischwasserauslauf einsetzbar ist und wobei das Ventilgehäuse eine Befestigungshülse aufweist, die oben auf dem Gehäusesockel angeordnet ist und eine Mischkartusche mit Steuerelementen in ihrer Position sichert.

Einhand-Mischventile für z.B. Waschtische sind in der Regel mit einem feststehenden Gussauslauf versehen, welcher mit dem Ventilgehäuse einstückig ausgebildet ist. Derartige Ausführungen sind relativ kostenaufwendig in der Herstellung. Bekannt sind ferner Einhand-Mischventile mit Schwenkausläufen. Mischventile dieser Konstruktion findet man häufig auf z.B. Spültischen in Küchen. Dabei ist das anschlussseitige Ende des Auslaufs mit einem hülsenförmigen Ring versehen, der das Ventilgehäuse umgibt und mit diesem einen Ringraum bildet, in den der Mischwasseraustritt des Ventilgehäuses mündet und der oben und unten durch O-Ringe abgedichtet ist. Konstruktionen dieser Art haben verschiedene Nachteile. Die Mischventile weisen einen relativ grossen Querschnitt auf und benötigen für die Abdichtung des Ringraumes entsprechend dimensionierte O-Ringe. An den Abdichtstellen muss das Ventilgehäuse exakt dimensioniert und genau bearbeitet sein, was wegen des grossen Querschnitts einen besonderen Aufwand erfordert. Dies trifft auch für das hülsenförmig gestaltete anschlussseitige Ende des Schwenkauslaufs zu. Es versteht sich ferner von selbst, dass eine gleichbleibende Leichtgängigkeit und sichere Abdichtung über einen längeren Zeitraum nicht gewährleistet werden kann, weil die O-Ringe wegen ihrer Grösse relativ hoch beansprucht sind und einem entsprechenden Verschleiss unterliegen. Eine deutlich verminderte Leichtgängigkeit tritt bereits dann ein, wenn die Qualität der Einfettung der O-Ringe etwas nachlässt. Schliesslich sind derartige Konstruktionen naturgemäss serviceunfreundlich, und sie eignen sich schlecht dazu, mit zusätzlichen Anschlüssen und Absperrventilen für die Versorgung von z.B. Geschirrspül- und Waschmaschinen ausgerüstet zu werden.

Bekannt sind ferner Mischventile in der Form von Standventilen der eingangs genannten Art (siehe DE-B-1 550 060). Bei dieser Konstruktion weist das Ventilgehäuse einen Gehäusesockel auf mit einer vorderen Öffnung, in die ein abnehmbarer Mischwasserauslauf einsetzbar ist. Auf dem Gehäusesockel befindet sich eine Mischkartusche mit Steuerelementen. Nachteilig bei dieser Konstruktion ist die Schraubverbindung zwischen dem Mischwasserauslauf und dem Gehäusesockel, was fertigungsaufwendig ist und ferner ist die Konstruktion für ein Mischventil mit einem schwenkbaren Mischwasserauslauf nicht geeignet.

Der Erfindung liegt die Aufgabe zugrunde, die vorstehenden Nachteile zu beseitigen und ein Mischventil der eingangs genannten Art zu schaffen, des einfach in seinem Aufbau und sicher in der Wirkungsweise ist.

Erreicht ist dieses Ziel dadurch,
– dass ein scheibenförmiger Anschlusskörper zwischen dem Gehäusesockel und der Befestigungshülse festgehalten wird,
– dass der Anschlusskörper durchgehende Öffnungen aufweist zum Anschluss von Kalt- und Warmwasserzulaufleitungen und vom Mischwasserauslauf aus der Mischkartusche,
– dass der Mischwasserauslauf aus zwei rohrförmigen Abschnitten besteht, wobei der erste Abschnitt ein Anschlussstück bildet, das senkrecht zwischen dem Anschlusskörper und dem Boden des Gehäusesockels gehalten wird und wobei der zweite Abschnitt seitlich aus dem ersten Abschnitt herauskommt,
– dass der Mischwasserauslauf unbeweglich oder um die Achse seines ersten Abschnitts schwenkbar gehalten ist.

Weitere Ausführungsformen der Erfindung sind in den Unteransprüchen gekennzeichnet.

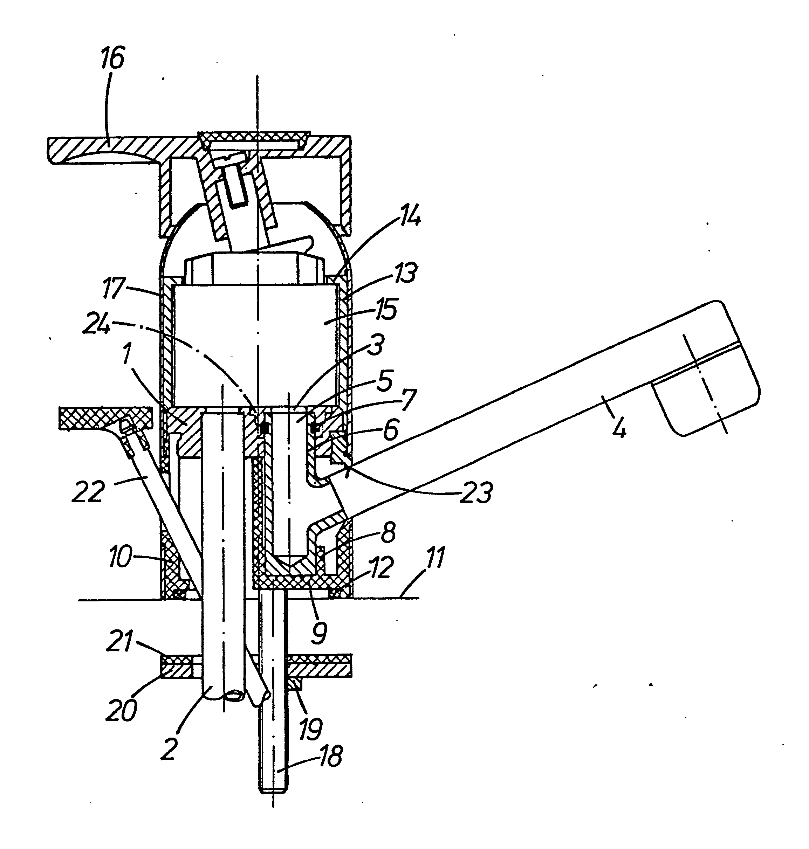

In der Zeichnung ist der Erfindungsgegenstand in einem Ausführungsbeispiel dargestellt; und zwar zeigt die Abbildung den Erfindungsgegenstand in der Form eines Einhebel-Waschtischventils.

Darin ist mit 1 ein scheibenförmiger Anschlusskörper bezeichnet, der an Kalt- und Warmwasserzulaufleitungen 2 anschliessbar ist. Der Anschlusskörper 1 besitzt einen nach unten gerichteten Mischwasseraustritt 3, der mit einem abnehmbaren Mischwasserauslauf 4 in Verbindung steht. Wie ersichtlich, ist der Auslauf 4 aus einem durchgehenden Rohrkörper gebildet, der an seinem dem Mischwasseraustritt 3 des Anschlusskörpers 1 zugewandten Ende mit einem nach oben gerichteten Mischwassereintritt 5 versehen und von unten an den Mischwasseraustritt 3 angeschlossen ist. Hierfür weist der Auslauf 4 ein rohrförmiges Anschlussstück 6 auf, dessen oberes Ende unter Zwischenschaltung eines O-Ringes 7 in den Mischwasseraustritt 3 einsteckbar ist. Das untere Ende des Anschlussstückes 6 lagert in einer diesem Ende angepassten Ausnehmung 8 eines Bodens 9. Der Boden 9 bildet den unteren Abschluss eines aus Kunststoff bestehenden Gehäusesockels 10 für das Anschlussstück 6. Der Gehäusesockel 10 ruht auf der Armaturenbank 11 des Waschtisches unter Zwischenschalten einer Dichtung 12, und er dient als Aufnahme für den Anschlusskörper 1, auf den eine Befestigungshülse 13 aufschraubbar ist, welche über einen oberen Innenkragen 14 eine Mischkartusche 15 mit scheibenförmigen Steuerelementen in ihrer Position sichert. Die Konstruktion der Kartusche 15 mit den Steuerelementen ist in der DE-B-1 550 060 offenbart. Die Betätigung des Mischventils erfolgt über einen Hebel 16.

Eine zweiteilige Verkleidung 17 umgibt die verschiedenen Bauteile des Mischventils. Die Befestigung des Gehäusesockels 10 mit dem Anschlusskörper 1 auf der Armaturenbank 11 erfolgt mittels Schrauben 18, die den Anschlusskörper 1, den Gehäusesockel 10 sowie die Armaturenbank 11 durchdringen und Muttern 19 tragen, wodurch eine Spannplatte 20 mit einer Gummischeibe 21 von unten gegen die Armaturenbank 11 schraubbar ist. Mit 22 ist eine übliche Zugstange für die Betätigung eines nicht dargestellten Plungers bezeichnet.

Der abnehmbare Auslauf 4 kann bei der gezeigten Ausführungsform unbeweglich oder schwenkbar angeordnet sein. Bei einer schwenkbaren Anordnung des Auslaufs 4 wird die Durchtrittsöffnung 23 des Gehäusesockels 10 für den Auslauf 4 entsprechend gross ausgebildet. Die beiden Befestigungsschrauben 18 können dabei gleichzeitig die Schwenkbewegung begrenzen. Hierfür kann das Anschlussstück 6 mit zwei nicht dargestellten Vorsprüngen an den Seiten versehen sein, die als Anschläge mit den Befestigungsschrauben zusammenwirken.

Für eine gegebenenfalls erforderliche Erneuerung des O-Ringes 7 des Anschlussstückes 6 kann der Mischwasseraustritt 3 des Anschlusskörpers 1 mit einem von oben entfernbaren Schraubeneinsatz 24 versehen sein.

Die dargestellte und beschriebene Ausführung ist nur ein Beispiel zur Verwirklichung der Erfindung, und diese ist nicht darauf beschränkt. So könnte ein erfindungsgemässes Mischventil z.B. mit beliebig anderen Steuerelementen ausgerüstet sein. Ferner kann der Erfindungsgegenstand auch als Küchen- oder Bidet-Mischventil ausgebildet sein oder als Thermostat-Mischventil.

Ferner kann es sich bei dem Erfindungsgegenstand um ein Einhand- oder auch um ein Zweigriff-Mischventil handeln. Schliesslich kann ein erfindungsgemässes Mischventil auch mit weiteren einzeln absperrbaren Wasseraustritten am Anschlusskörper versehen sein für die Versorgung verschiedener Verbrauchsstellen. Diese Ausgestaltungen der Erfindung sind in den Ansprüchen 3 und 4 beansprucht. Danach kann das Mischventil auch in der Form eines Einhandmischventils mit Schwenkauslauf ohne Schwierigkeiten mit weiteren von der Seite her oder von vorne einzeln absperrbaren und vorzugsweise ebenfalls nach unten gerichteten Wasseraustritten versehen sein für die Versorgung zusätzlicher Verbrauchsstellen, z.B. für den Anschluss von Geschirrspül- und Waschmaschinen.

**Patentansprüche**

1. Mischventil in der Form eines Standventils für Waschtische, Spültische, Sitzwaschbecken od.dgl. sanitäre Apparate, wobei das Ventilgehäuse bestehend aus einem Gehäusesockel (10), der senkrecht auf der Armaturenbank (11) ruht und eine vordere Öffnung (23) aufweist, in die ein abnehmbarer Mischwasserauslauf (4) einsetzbar ist und aus einer Befestigungshülse (13), die oben auf dem Gehäusesockel (10) angeordnet ist und eine Mischkartusche (15) mit Steuerelementen in ihrer Position sichert, dadurch gekennzeichnet,

– dass ein scheibenförmiger Anschlusskörper (1) zwischen dem Gehäusesockel (10) und der Befestigungshülse (13) festgehalten wird,

– dass der Anschlusskörper (1) durchgehende Öffnungen aufweist zum Anschluss von Kalt- und Warmwasserzulaufleitungen (2) und vom Mischwasserauslauf (4) aus der Mischkartusche (15),

– dass der Mischwasserauslauf (4) aus zwei rohrförmigen Abschnitten besteht, wobei der erste Abschnitt ein Anschlussstück (6) bildet, das senkrecht zwischen dem Anschlusskörper (1) und dem Boden (9) des Gehäusesockels (10) gehalten wird und wobei der zweite Abschnitt seitlich aus dem ersten Abschnitt herauskommt,

– dass der Mischwasserauslauf (4) unbeweglich oder um die Achse seines ersten Abschnitts schwenkbar gehalten ist.

2. Mischventil nach Anspruch 1, dadurch gekennzeichnet, dass das obere Ende des Anschlussstückes (6) in den Mischwasseraustritt (3) des Anschlusskörpers (1) einsteckbar ist, während das untere Ende des Anschlussstückes (6) in einer diesem Ende angepassten Ausnehmung (8) des Bodens (9) lagert, der den unteren Abschluss des Gehäusesockels (10) für das Anschlussstück (6) des Mischwasserauslaufs (4) bildet.

3. Mischventil nach Anspruch 1 und gegebenenfalls 2, dadurch gekennzeichnet, dass der Anschlusskörper (1) zusätzlich einen oder mehrere Wasseraustritte für Mischwasser und/oder einen oder mehrere von seinen Zulaufkanälen für kaltes oder warmes Wasser abzweigende Wasseraustritte aufweist, wobei diese Wasseraustritte vorzugsweise ebenfalls nach unten gerichtet sind, an welche Zulaufleitungen für z.B. Spül- oder Waschmaschinen anschliessbar und die einzeln durch Ventile absperrbar sind, die sich in dem Mischventil befinden.

4. Mischventil nach Anspruch 3, dadurch gekennzeichnet, dass die Ventile durch Drucktasten betätigbar sind, die sich auf der Vorderseite des Mischventils befinden.

**Claims**

1. Mixing valve in the form of a pillar tap for washbasins, sinks, bidets or similar sanitary apparatus, wherein the valve housing comprises a housing pedestal (10) which rests vertically on the fittings shelf (11) and has a front aperture (23) into which can be inserted a removable mixing water outlet (4), and a securing sleeve (13) which is disposed at the top of the housing pedestal (10) and keeps in position a mixing cartridge (15) with control elements, characterised in that a disc-shaped connection body (1) is retained between the housing pedestal (10) and the securing sleeve (13), in that the connection body (1) has throughgoing apertures for the connection of cold- and hot-water supply lines (2) and from the mixing water outlet (4) out of the mixing cartridge (15), in that the mixing water outlet (4) comprises two tubular sections wherein the first section forms a connection piece (6) which is held vertically between the connection body (1) and the base (9) of the housing pedestal (10), and wherein the second section comes laterally out of the first section, and in that the mixing water outlet (4) is retained fixedly or pivotally round the axis of its first section.

2. Mixing valve according to claim 1, characterised in that the upper end of the connection piece (6) can be inserted into the mixing water outlet (3) of the connection body (1), whilst the lower end of the connection piece (6) is supported in a recess (8) of the base (9) adapted to this end, and the base forms the lower end of the housing pedestal (10) for the connection piece (6) of the mixing water outlet (4).

3. Mixing valve according to claim 1 and if necessary claim 2, characterised in that the connection body (1) additionally has one or several water outlets for mixing water and/or one or several water outlets branching from its supply channels for cold or hot water, whereby these water outlets are also preferably directed downwardly, to which supply lines for e.g. rinsing- or washing machines can be connected and can be individually blocked by valves which are located in the mixing valve.

4. Mixing valve according to claim 3, characterised in that the valves can be actuated by push buttons which are located on the front side of the mixing valve.

**Revendications**

1. Mélangeur se présentant sous la forme d'un robinet simple pour lavabos, éviers, bidets ou appareils sanitaires analogues, dans lequel le logement du mélangeur comprend un socle (10) reposant verticalement sur l'assise (11) de la robinetterie et présente une ouverture avant (23) dans laquelle peut être introduite une sortie d'eau mélangée (4) amovible et dans lequel le logement du mélangeur comprend une douille de fixation (13) disposée au-dessus sur le socle de logement (10) et maintient en position une cartouche mitigeuse (15) comprenant des éléments de commande,
   caractérisé en ce que:

– un corps de raccordement en forme de disque (1) est fixé entre le socle de logement (10) et la douille de fixation (13),
– le corps de raccordement (1) présente des ouvertures traversantes en vue de sa jonction à des amenées d'eau froide et d'eau chaude (2) et à la sortie d'eau mélangée (4) provenant de la cartouche mitigeuse (15),
– la sortie d'eau mélangée (4) est formée de deux sections tubulaires, la première section constituant un élément de raccordement (6) qui est maintenu perpendiculairement entre le corps de raccordement (1) et le fond (9) du socle de logement (10) et la seconde section s'étendant latéralement vers l'extérieur à partir de la première,
– la sortie d'eau mélangée (4) est montée de façon immobile ou pivotante autour de l'axe de sa première section.

2. Mélangeur selon la revendication 1, caractérisé en ce que l'extrémité supérieure de l'élément de raccordement (6) peut être enfoncée dans la sortie d'eau mélangée (3) du corps de raccordement (1), alors que l'extrémité inférieure de l'élément de raccordement (6) est disposée dans un évidement (8) adapté à cette extrémité du fond (9) qui forme le raccord inférieur du socle de logement (10) destiné à l'élément de raccordement (6) de la sortie d'eau mélangée (4).

3. Mélangeur selon la revendication 1 et éventuellement 2, caractérisé en ce que le corps de raccordement (1) comprend, en outre, une ou plusieurs sorties d'eau mélangée et/ou une ou plusieurs sorties d'eau en dérivation de ses canalisations d'amenée d'eau froide ou d'eau chaude, ces sorties d'eau étant, de préférence, également dirigées vers le bas, auxquelles peuvent être raccordées des conduites d'amenée destinées, par exemple, à des lave-vaisselle ou à des machines à laver, et qui peuvent être fermées individuellement par des robinets prévus dans le mélangeur.

4. Mélangeur selon la revendication 3, caractérisé en ce que les robinets peuvent être manœuvrés par des boutons-poussoirs situés sur l'avant du mélangeur.